# EUROPEAN PATENT APPLICATION

(11) **EP 0 843 380 A2**
(43) Date of publication of application: **20.05.1998**
(21) Application number: 97119919.5
(22) Date of filing: 13.11.1997
(51) Int. Cl.: H01Q 3/26

(54) **Wireless mobile communication system**

(30) Priority: 13.11.1996 JP 301484/96
(71) Applicant: SUMITOMO ELECTRIC INDUSTRIES, LTD., Osaka-shi, Osaka 541 (JP); COMMUNICATIONS RESEARCH LABORATORY, MINISTRY OF POSTS AND TELECOMMUNICATIONS, Koganei-shi, Tokyo 184 (JP)
(72) Inventor: Okada, Yoji, 4-chome, Koganei-shi, Tokyo 184 (JP); Tsuji, Hiroyuki, 4-chome, Koganei-shi, Tokyo 184 (JP); Iwama, Tsukasa, 4-chome, Koganei-shi, Tokyo 184 (JP); Yoshimoto, Shigehiro, 4-chome, Koganei-shi, Tokyo 184 (JP)
(74) Representative: Popp, Eugen, Dr.

(57) **Abstract**

The present invention aims at alleviating the load to a radio base station without degrading the performance of the radio base station and at reducing the costs of a system as a whole. In a wireless mobile communication system according to the present invention, an array antenna including element antennas (3a), (3b), ..., (3n) is employed as a radio base station antenna (3), and a signal to be fed to the antenna in accordance with the position of a mobile station or data necessary to generate the signal is transmitted from the control station (1) to the radio base station antenna (3) so as to change the directivity of the radio base station antenna (3) in adaptation to the traveling of the mobile station for communications between the radio base station and the mobile station.

## Description

### Technical field of the invention

The present invention relates to a wireless mobile communication system which comprises a control station and a plurality of radio base stations connected to the control station by cables and allows for wireless communications between the radio base stations and mobile stations. The wireless mobile communication system is applicable to futuristic personal communications, traffic information system, and vehicle information and communication system.

### Background art

ATM wireless access systems have been proposed which make the best use of the microwave-on-fiber technologies (utilizing optical fibers as high frequency signal transmission lines instead of coaxial cables) thereby to achieve wireless access to B-ISDN networks by means of millimeter or sub-millimeter radio waves (M. Umehira, A. Hashimito, H. Matsue, "An ATN Wireless System for Tetherless Multimedia Services", ICUPC '95 IEEE).

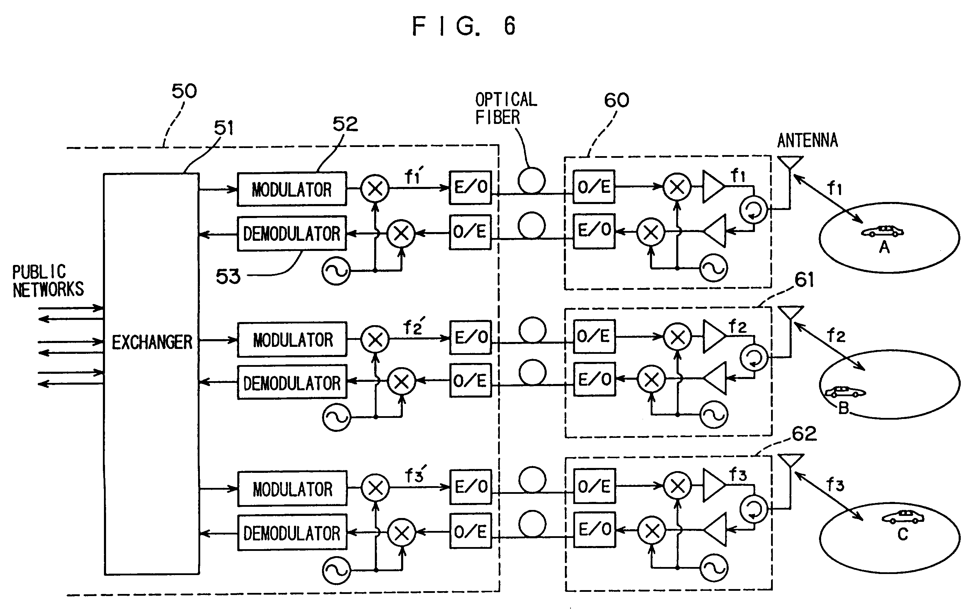

Fig. 6 is a block diagram illustrating the hardware construction of one exemplary wireless access system of this type.

In Fig. 6, "E/O" and "O/E" denote an electric-optical conversion element and an optical-electric conversion element, respectively (which are hereinafter collectively referred to as "photoelectric conversion elements"). Further, "X", "A", "φ with an arrow", "Δ", "inverted C with an arrow" and "∼" denote a mixer, a variable attenuator, a phase shifter, an amplifier, a circulator and a local oscillator, respectively (the notations are common in all the attached drawings).

In the system shown in Fig. 6, each of radio base stations 60, 61, 62, etc. has photoelectric conversion elements, mixers, amplifiers, a circulator, a local oscillator and an antenna.

A control station 50 has an exchanger 51 connected to a public networks such as B-ISDN (Broadband aspects of Integrated Services Digital Network) network, modulators 52, demodulators 53, local oscillators, mixers and photoelectric conversion elements.

### Disclosure of the invention

The system of the prior art employs an omnidirectional antenna or a set of sector antennas. If the omnidirectional antenna is employed, signal power is radiated in all directions equally. The reflection and scattering of radio wave tend to cause multi-path fading, thereby hindering high capacity broad band transmission.

If the sector antennas are employed and each antennas are switched from time to time, the adverse effect of the multi-path fading by reflection and scattering is alleviated. However, if antennas each having a limited directivity are employed for controlling directivity precisely, the number of antennas for each base station is increased, so that number of switching times becomes frequent. Therefore, realization of a practical antenna switch is difficult.

In addition, larger-scale radio base stations are required, thereby increasing the difficulty for installation of the radio base stations.

It is therefore an object of the present invention to provide a wireless mobile communication system which employs a radio base station of a simplified construction and has a function to precisely control the directivity of an antenna in the radio base station in adaptation to the position of a mobile station.

The wireless mobile communication system according to the present invention is characterized in that the radio base station antenna is a variably directional antenna having an antenna directivity to be variably controlled by an electric signal fed to the antenna; and in that a control station obtains the electric signal to be fed to the radio base station antenna through computation on the basis of a signal received from the mobile station by the radio base station antenna, and the electric signal or data necessary for generation of the electric signal is transmitted to the radio base station via a communication medium, thereby adaptively controlling the directivity of the radio base station antenna in adaptation to the traveling of the mobile station for communications therewith (claim 1).

The variably directional antenna employed in this system exhibits an electrically variable directivity, and the antenna directivity control is centralized at the control station. Thus, the load to the radio base station is alleviated without degrading the performance of the radio base station, thereby reducing the system costs as a whole.

The variably directional antenna may be an array antenna, for example, including a plurality of element antennas (claim 2).

In the array antenna, the element antennas are arranged linearly or two-dimensionally. Phase shifters are employed to allow the respective element antennas to have different phases, thus, equiphase front of radio waves emitted from the antenna can be varied on the basis of the phase difference. Further, by controlling the amplitude of a signal to be fed to each of the element antennas, the directivity of the antenna can more precisely be controlled as desired.

The wireless mobile communication system of claim 2 may be characterized in that the communication medium is an optical fiber; in that a plurality of high frequency electric signals to be applied to the radio base station for controlling the directivity of the radio base station antenna are generated through modulation with information to be transmitted by operating a plurality of phase shifters and a plurality of variable attenuators installed in the control station, then the generated high frequency electric signals are respectively intensity-modulated with light beams having different wavelengths to be combined with each other thereby being converted into optical signals; and in that the optical signals received by the radio base station are divided into wavelength-based signals which are respectively converted into high frequency electric signals to be applied to the respective element antennas, thereby radiating the high frequency electric signals as radio waves (claim 3).

In the control station, the high frequency electric signals modulated with the information to be transmitted are thus converted into the optical signals which are in turn transmitted to the radio base station via an optical fiber. By applying a wavelength multiplexing method to this so-called microwave-on-fiber technologies, the number of optical fibers required for the transmission of the plurality of high frequency electric signals having different phases is minimized to achieve lossless broad band signal transmission.

The wireless mobile communication system of claim 2 may be characterized in that the communication medium is an optical fiber; in that a plurality of high frequency electric signals to be applied to the radio base station for controlling the directivity of the radio base station antenna are generated through modulation with information to be transmitted by way of digital signal processing, then the generated high frequency electric signals are respectively intensity-modulated with light beams having different wavelengths and combined with each other thereby being converted into optical signals; and in that the optical signals received by the radio base station are divided into wavelength-based signals which are respectively converted into high frequency electric signals to be applied to the respective element antennas, thereby radiating the high frequency electric signals as radio waves (claim 4).

In this system, the plurality of high frequency electric signals are generated through modulation with the information to be transmitted by way of the digital signal processing. This is achieved, for example, by employing a digital beamforming (DBF) technique. With this technique, the signals to be applied to the element antennas are generated by way of the digital signal processing instead of employing the phase shifters. More specifically, the directivity of each of the antennas is controlled by converting signals from the respective element antennas into digital signals which are combined with each other with their amplitudes and phases being numerically calculated.

The wireless mobile communication system of claim 2 may be characterized in that high frequency electric signals modulated with information to be transmitted and a control signal for controlling the directivity of the radio base station antenna are multiplexed in the control station; and in that, in the radio base station, signals received are divided into high frequency electric signals and a control signal for controlling the directivity of the radio base station antenna, and high frequency electric signals generated by operating phase shifters and variable attenuators connected to the respective element antennas on the basis of the control signal for controlling the antenna directivity are fed to the respective element antennas for radiation thereof as radio waves (claim 5).

In this system, the control station generates and multiplexes the control signal for controlling the directivity of the radio base station antenna and transmits the control signal to the radio base station. The radio base station having the phase shifters and the variable attenuators controls the directivity of the radio base station antenna by operating the phase shifters and the variable attenuators on the basis of the control signal. Although the scale of the radio base station is increased because of the provision of the phase shifters and the variable attenuators, it is not necessary to employ the wavelength multiplexing method.

In accordance with claim 6, the wireless mobile communication system has the function of estimating the direction of incidence of high frequency radio waves received by the respective element antennas in the radio base station. In this system, directions from which the high frequency radio waves are incident to the respective radio base station antennas are all estimated by the control station. This obviates the need for providing a computer for the estimation in each of the radio base stations, so that the scale of each of the radio base stations can be reduced.

### Description of drawings

Fig. 1 is a diagram illustrating the construction of a wireless mobile communication system which allows for bilateral wireless communications between a radio base station and a mobile station;
Fig. 2 is a block diagram illustrating the hardware construction of a radio base station and a control station according to the present invention;
Fig. 3 is diagrams for explaining a directivity central controlling system;
Fig. 4 is a diagram illustrating a wireless mobile communication system according to another embodiment of the present invention;
Fig. 5 is a diagram illustrating a wireless mobile communication system according to still another embodiment of the present invention; and
Fig. 6 is a diagram illustrating a conventional wireless mobile communication system.

### Description of carrying out the invention

Embodiments of the present invention will hereinafter be described in detail with reference to the attached drawings.

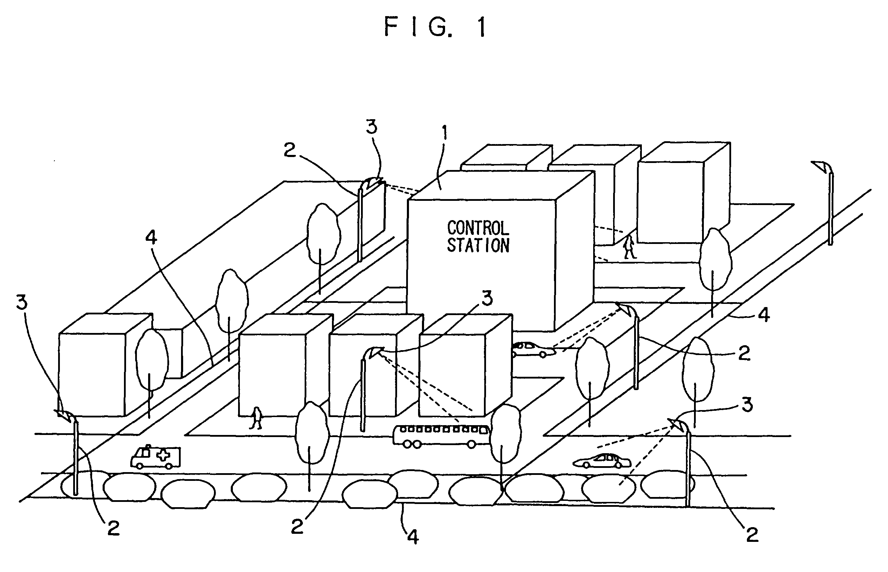

Fig. 1 illustrates a wireless mobile communication system which allows for bilateral wireless communications between a radio base station and a mobile station. A plurality of radio base stations 2 are connected to a control station 1 (a building located in the center of Fig. 1) via optical fibers 4. Each of the radio base stations has an antenna 3 which is comprised of an array antenna including a plurality of element antennas.

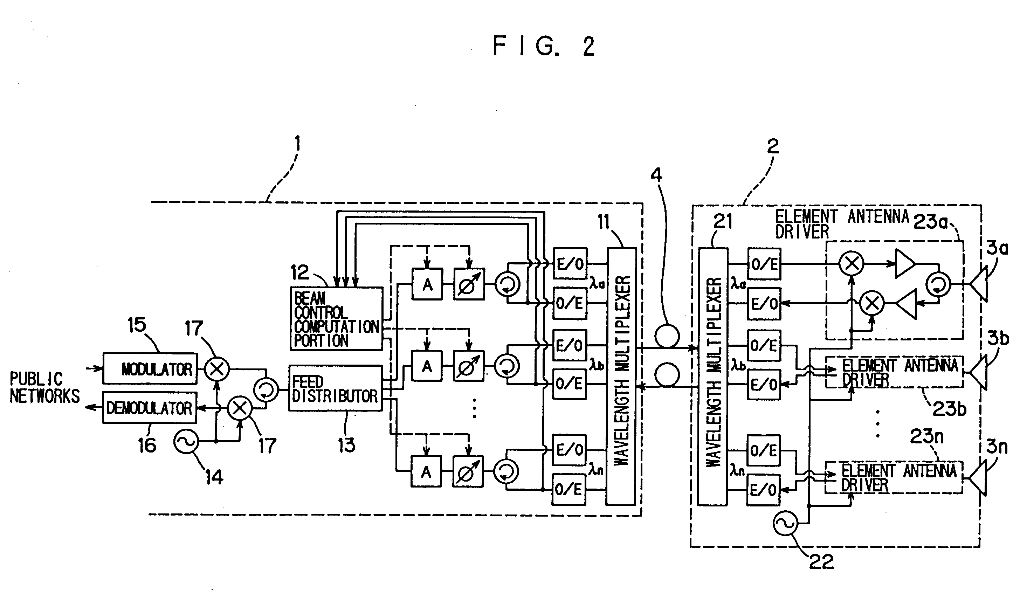

Fig. 2 is a block diagram illustrating the hardware construction of the radio base station 2 and the control station 1.

Electric-optical conversion elements E/O are each comprised of, for example, a semiconductor laser adapted to be excited by an electric signal or of an external optical modulator adapted to modulate the intensity of a light beam from a light source with an electric signal, while optical-electric conversion elements O/E are each comprised of a light receiving element such as an IMPATT diode or a PIN diode.

The radio base station 2 includes a wavelength multiplexer 21 connected to optical fibers 4, photoelectric conversion elements, a local oscillator 22, element antenna drivers 23a, 23b, ..., 23n (hereinafter referred to generally as "element antenna drivers 23i"), and element antennas 3a, 3b, ..., 3n (hereinafter referred to generally as "element antennas 3i").

The wavelength multiplexer 21 serves to divide a light beam transmitted through an optical fiber on a wavelength basis and includes, for example, optical filters and photo-couplers. The element antenna drivers 23i each include mixers, amplifiers and a circulator, and serve to drive the element antennas 3i. The mixer serves to convert the frequency of radio waves from a 1.5 GHz band to a 60 GHz band for radiation of the radio waves from the element antenna 3i.

The control station 1 includes a modulator 15 and a demodulator 16 each connected to a public network, a local oscillator 14, mixers 17, circulators, a feed distributor 13, variable attenuators, phase shifters, photoelectric conversion elements and a wavelength multiplexer 11.

Although only one radio base station is depicted in Fig. 2, a plurality of radio base stations are provided as a matter of course, and the control station 1 has a plurality of component sets each having the same construction as described above for the respective radio base stations. Arrangements for a channel allocation function and a hand-over function of the control station 1 are not shown in Fig. 2.

The modulator 15 modulates voice signals, image signals and like signals from the public networks, for example, at a rate of 2 M (mega) bps on a π/4-QPSK basis, and the demodulator 16 performs demodulation in reverse to the modulation. The mixers 17 convert the π/4-QPSK-modulated signals to intermediate frequency band (1.5 GHz band) signals by utilizing signals generated by the local oscillator 14. The feed distributor 13 divides the intermediate frequency band signals into n groups.

The n groups of signals are respectively imparted with predetermined amplitudes and phases by the variable attenuators and the phase shifters, and then converted into intensity-modulated signals modulated with light beams of different wavelengths by the photoelectric conversion elements. These light beams are transmitted from the wavelength multiplexer 11 via an optical fiber 4.

An explanation will next be given to a beam control computation portion 12 which functions to estimate the direction of incidence of radio waves and to generate a control signal for controlling the antenna directivity. The beam control computation portion 12 analyzes the amplitudes and phases of a plurality of intermediate frequency band signals applied to the control station through the element antennas, the mixers, the photoelectric conversion elements and the wavelength multiplexer of the radio base station and an optical fiber so as to estimate the direction of the incidence of the radio waves. Various methods such as MUSIC method, ESPRIT method and maximum likelihood estimation method have been proposed as the estimation method. These estimation methods are disclosed, for example, in "Two Decades of Array Signal Processing Research", H. Krim and M. Viberg, IEEE Signal Processing Magazine, pp. 67-94, July 1996.

The beam control computation portion 12 generates a control signal for controlling the phase shifters and the variable attenuators for beamforming of the radio base station antenna toward the estimated direction. Exemplary beam-forming methods are disclosed in Barry D. Van Veen and Kevin M. Buckley, "Beam forming: A Versatile approach to Spatial Filtering", IEEE ASSP Magazine, pp. 4-24, April 1988. Since the direction of the incidence of the radio waves is always changed due to traveling of the mobile station, computation for the estimation of the radio wave incident direction and the beamforming is carried out at proper time intervals.

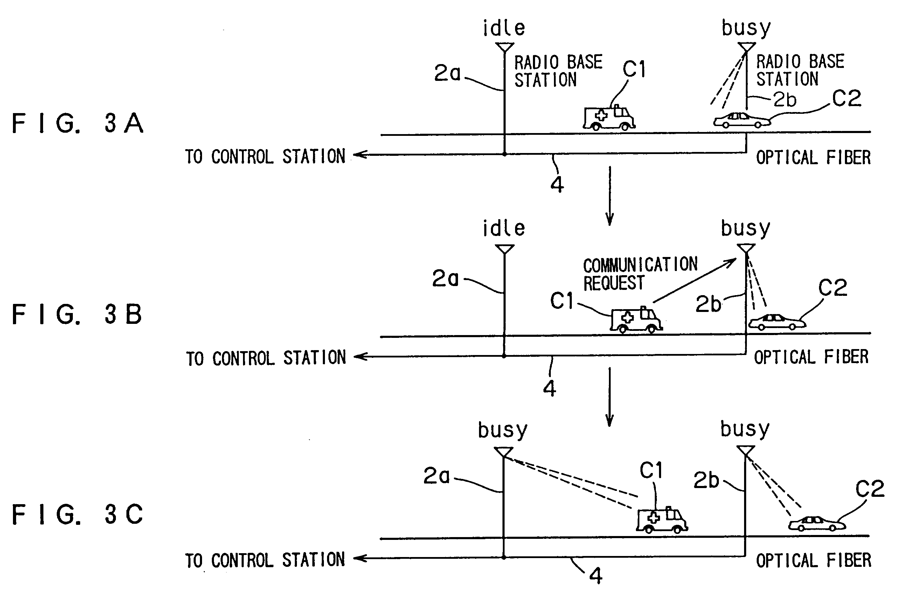

The system of the present invention can determine the position of the mobile station and the direction of the traveling of the mobile station and, therefore, can be applied to the centralized directivity controlling system which allows the control station 1 to centrally control the directivities of the respective radio base station antennas. Fig. 3 illustrates vehicles C1 and C2 which are to communicate with radio base stations 2a and 2b. In this directivity central controlling system, if the radio base station 2b receives a communication request from the vehicle C1 during communication between the radio base station 2b and the vehicle C2 (see Fig. 3(a)), the antenna directivity is controlled to enable the vehicle C1 to communicate with the adjacent radio base station 2a instead.

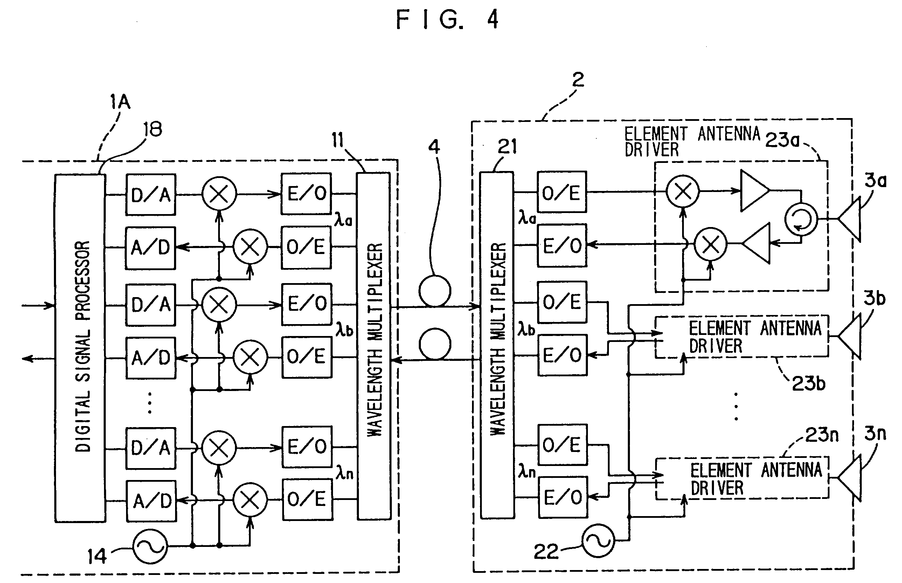

Fig. 4 illustrates a wireless mobile communication system according to another embodiment of the present invention. The system has a construction adapted for digital beamforming (DBF), whereby signals received by respective element antennas are digitally processed for forming a beam having a certain directivity (Hans Steyskal, "Digital Beamforming Antennas; An Introduction", Microwave Journal, Vol. 30, No. 1, pp. 107-124, January 1987).

A radio base station 2 has the same construction as illustrated in Fig. 2, but a control station 1A has a construction different from that illustrated in Fig. 2.

The control station 1A has a digital signal processor 18, A/D convertors and D/A convertors. The digital signal processor 18 performs digital signal processing to generate, for example, 2-Mbits/s π/4-QPSK signals from voice signals and image signals applied from a public network with a 130 MHz clock. The D/A convertors each convert the digital signals applied from the digital signal processor 18 into 2-Mbits/s π/4-QPSK signals. The signals thus obtained have phase and amplitude information for beamforming at the respective element antennas.

This system obviates the need for providing a variable attenuator, a phase shifter and a beam control computation portion 12 for controlling the variable attenuator and the phase shifter which are provided in the wireless mobile communication system according to the embodiment shown in Fig. 2, thereby achieving a higher degree of integration.

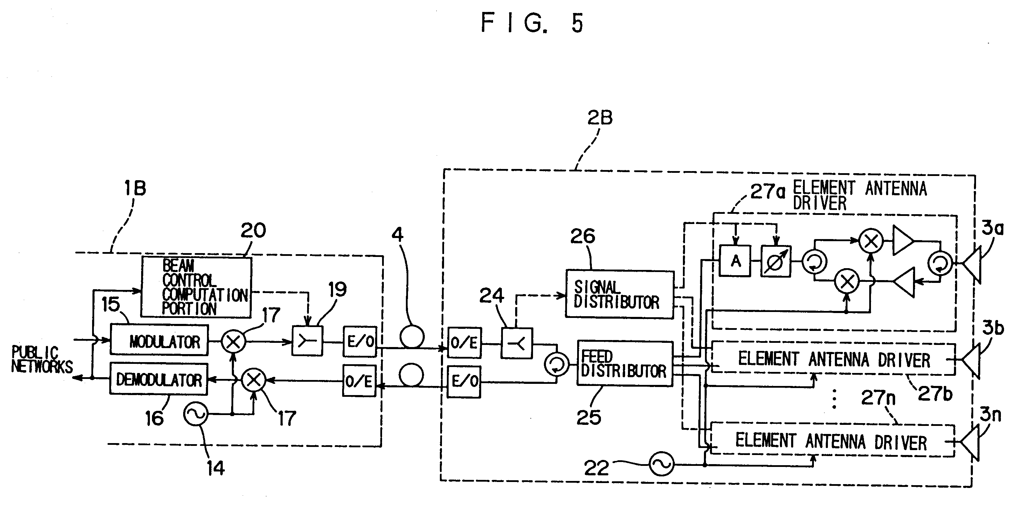

Fig. 5 is a diagram illustrating the construction of a wireless mobile communication system according to still another embodiment of the present invention.

This system employs light beams having a single wavelength without wavelength multiplexing. A signal for amplitude and phase control at respective element antennas 3i (hereinafter referred to as "control signal") is transmitted from a control station 1B to a radio base station 2B, and a radio signal having a predetermined amplitude and phase is generated in the radio base station 2B.

The radio base station 2B includes photoelectric conversion elements, a branching filter 24, a feed distributor 25, a control signal distributor 26, element antenna drivers 27a, 27b, ..., 27n (hereinafter generally referred to as 27i) and element antennas 3a, 3b, ..., 3n (hereinafter generally referred to as 3i).

The branching filter 24 takes the control signal out of electric signals converted by the photoelectric conversion element. The feed distributor 25 divides the electric signals converted by the photoelectric conversion element into n groups. The control signal distributor 26 distributes the amplitude and phase information included in the control signals for the respective element antennas 3i to the element antenna drivers 27i.

The element antenna drivers 27i each include a variable attenuator, a phase shifter, mixers, amplifiers and a circulator. The variable attenuator and the phase shifter determine the amplitude and phase of a radio signal on the basis of the amplitude and phase information for the respective element antenna contained in the control signal.

The control station 1B includes a modulator 15 and a demodulator 16 each connected to a public network, a local oscillator 14, mixers 17, a combiner 19, a beam control computation portion 20 and photoelectric conversion elements.

The beam control computation portion 20 generates the amplitude and phase information for the respective element antennas 3i like the beam control computation portion 12 shown in Fig. 2, but is different from the beam control computation portion 12 in that the generated amplitude and phase information is combined with electric signals by the combiner 19 (through subcarrier multiplexing, for example), and then the combined signals are transmitted through the optical fiber 4.

In the system having such a construction, the control signal is transmitted from the control station 1B to the radio base station 2B, and radio signals each having a predetermined amplitude and phase are generated in the radio base station 2B. Therefore, the need for wavelength multiplexing is obviated thereby to alleviate the load to the control station 1B.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A wireless mobile communication system comprising a control station (1) and a plurality of radio base stations (2) connected to the control station (1) via a communication medium (4) and adapted for radio communications between the radio base stations (2) and a mobile station, the system being characterized in that antennas (3) of the radio base stations are each comprised of a variably directional antenna having an antenna directivity to be variably controlled by an electric signal fed to the antenna;
and in that the control station (1) obtains the electric signal to be fed to the radio base station antenna (3) through computation on the basis of a signal received from the mobile station through the radio base station antenna (3), and the electric signal or data necessary for generation of the electric signal is transmitted to the radio base station (2) via the communication medium (4) to adaptively control the directivity of the radio base station antenna (3) in adaptation to the traveling of the mobile station for communications therewith.

2. A wireless mobile communication system as set forth in claim 1, wherein the variably directional antenna (3) is comprised of an array antenna in which the directivity is changed by electrically changing the amplitudes and relative phases of signals respectively fed to a plurality of element antennas (3a), (3b), ..., (3n).

3. A wireless mobile communication system as set forth in claim 2, characterized in that the communication medium (4) is an optical fiber;
in that a plurality of high frequency electric signals to be applied to the radio base station (2) for controlling the directivity of the radio base station antenna (3) are generated through modulation with information to be transmitted by operating a plurality of phase shifters and a plurality of variable attenuators in the control station (1), then respectively intensity-modulated with light beams having different wavelengths and combined with each other;
and in that optical signals received by the radio base station (2) are divided into wavelength-based signals which are respectively converted into high frequency electric signals to be applied to the respective element antennas (3a), (3b), ..., (3n) and the high frequency electric signals are respectively fed to the element antennas (3a), (3b), ..., (3n) for radiation thereof as radio waves.

4. A wireless mobile communication system as set forth in claim 2, characterized in that the communication medium (4) is an optical fiber;
in that a plurality of high frequency electric signals to be applied to the radio base station (2) for controlling the directivity of the radio base station antenna (3) are generated through modulation with information to be transmitted by way of digital signal processing, then respectively intensity-modulated with light beams having different wavelengths and combined with each other;
and in that optical signals received by the radio base station (2) are divided into wavelength-based signals which are respectively converted into high frequency electric signals to be applied to the respective element antennas (3a), (3b), ..., (3n) and the high frequency electric signals are respectively fed to the element antennas (3a), (3b), ..., (3n) for radiation thereof as radio waves.

5. A wireless mobile communication system as set forth in claim 2, characterized in that high frequency electric signals modulated with information to be transmitted and a control signal for controlling the directivity of the radio base station antenna (3) are multiplexed in the control station (1);
and in that signals received by the radio base station (2) are divided into high frequency electric signals and a control signal for controlling the directivity of the radio base station antenna (3) in the radio base station (2), and high frequency electric signals generated by operating phase shifters and variable attenuators connected to the respective element antennas (3a), (3b), ..., (3n) on the basis of the control signals for controlling the antenna directivity are respectively fed to the element antennas (3a), (3b), ..., (3n) for radiation thereof as radio waves.

6. A wireless mobile communication system as set forth in claim 3 or 4, characterized in that high frequency electric signals radiated as radio waves modulated with information to be transmitted from the mobile stations are received by the element antennas (3a), (3b), ..., (3n) in the radio base station (2), then intensity-modulated with light beams having different wavelengths and combined with each other, and in that light intensity signals received by the control station (1) are divided into wavelength-based signals which are converted back into the original high frequency electric signals to estimate the direction of incidence of the radio waves received by the respective element antennas (3a), (3b), ..., (3n) of the radio base station (2).
